Europäisches Patentamt

European Patent Office

Office européen des brevets

(11) Numéro de publication : **0 395 517 B1**

## (12) FASCICULE DE BREVET EUROPEEN

(45) Date de publication du fascicule du brevet :
**24.06.92 Bulletin 92/26**

(51) Int. Cl.⁵ : **G01N 3/20**

(21) Numéro de dépôt : **90401134.3**

(22) Date de dépôt : **25.04.90**

(54) **Rigidimètre.**

(30) Priorité : **28.04.89 FR 8905723**

(43) Date de publication de la demande :
**31.10.90 Bulletin 90/44**

(45) Mention de la délivrance du brevet :
**24.06.92 Bulletin 92/26**

(84) Etats contractants désignés :
**DE GB IT**

(56) Documents cités :
**BE-A- 655 821**
**US-A- 3 158 021**
**US-A- 3 368 394**
**PATENT ABSTRACTS OF JAPAN, vol. 5, no.**
**182 (P-90)[854], 20 novembre 1981 & JP-A-56**
**111 444 (TOKYO TUNGSTEN K.K.) 03091981**

(73) Titulaire : **ETAT FRANCAIS représenté par le**
**C.N.E.T.**
**38-40 rue du Général Leclerc**
**F-92131 Issy-les-Moulineaux (FR)**

(72) Inventeur : **Sautejeau, Claude**
**28, Chemin des Bazins**
**F-44340 Bouguenais (FR)**

(74) Mandataire : **Armengaud, Alain et al**
**Cabinet ARMENGAUD AINE 3, Avenue**
**Bugeaud**
**F-75116 Paris (FR)**

EP 0 395 517 B1

## Description

La présente invention est relative à un appareil permettant de contrôler la rigidité d'un objet plat destiné à la correspondance, en particulier d'enveloppes de lettres ou autres courriers analogues, en vue du traitement ultérieur de ces lettres dans une installation de tri automatique.

On sait en effet que les machines automatiques de tri du courrier ne peuvent fonctionner convenablement que dans la mesure où les enveloppes des lettres ou autres plis présentent une rigidité en dynamique suffisante, définie notamment par la Norme Française NF Q 03025, correspondant à une valeur minimale de 0,72.10 mN (millinewton), ceci afin d'éviter des bourrages dans le défilement des lettres à l'intérieur de la machine ou des défauts de pincement entre les courroies de celle-ci, qui assurent leur transfert.

Actuellement, les appareils de contrôle de la rigidité des enveloppes de courrier sont à fonctionnement manuel et utilisent en particulier un dispositif à affichage au moyen d'une aiguille défilant devant un repère gradué. Dans ces conditions, la mesure, qui est liée à la transmission mécanique établie entre l'aiguille et un palpeur appliqué sur la lettre, n'est guère précise et surtout ne permet pas de s'affranchir de la dextérité plus ou moins grande de l'opérateur qui exerce sur la lettre l'effort nécessaire à la mesure de la rigidité. L'interprétation de la lecture du résultat est donc très aléatoire et, d'une façon générale, peu satisfaisante.

La présente invention est relative à un appareil de contrôle qui pallie les inconvénients des appareils classiques, en désolidarisant totalement le mécanisme exerçant un effort déterminé sur la lettre pour en éprouver la rigidité et les moyens assurant la mesure des effets résultant de cet effort, en éliminant les incertitudes de la lecture et de l'interprétation des résultats correspondants. L'invention vise également à fournir un appareil permettant une visualisation immédiate de ces résultats, grâce à un système fonctionnant notamment par tout ou rien, donc sans aucune possibilité d'erreur et sans qu'il soit nécessaire de procéder à les réglages préalables délicats et incertains.

A cet effet, l'appareil considéré comporte un appui fixe pour une enveloppe à contrôler, constitué de trois barres, équidistantes, parallèles et disposées dans un plan horizontal, ces barres délimitant deux à deux, deux zones voisines de l'enveloppe le même dimension transversale, un poids mobile de sasse étalonnée, comprenant deux barres de réaction, également parallèles entre elles et aux barres d'appui fixes et disposées au-dessus de l'enveloppe, sensiblement au milieu des zones délimitées par ces barres d'appui fixes, des moyens pour successivement immobiliser le poids dans une position relevée où ses deux barres de réaction ne sont pas en contact avec l'enveloppe alors librement introduite entre celles-ci et les barres d'appui fixes puis pour le libérer de telle sorte qu'il s'appuie sur l'enveloppe par ses deux barres de réaction et enfin pour ramener le poids en position initiale, des moyens pour mesurer le déplacement relatif par rapport à un repère fixe du poids mobile lorsque ses barres de réaction sont en appui sur l'enveloppe et des moyens pour faire déplacer l'enveloppe entre les barres d'appui fixes et les barres de réaction du poils mobile.

Selon une caractéristique particulière de l'appareil, les moyens pour immobiliser puis libérer et enfin ramener le poids mobile, sont constitués par un levier de blocage, sur lequel bute le poids par son extrémité inférieure, ce levier, articulé sur un axe fixe, coopérant avec un pion en saillie, entraîné en rotation à vitesse réglable par un disque tournant et immobilisant le levier et le poids pour la position du pion à la verticale de l'axe du disque.

Selon l'invention, les moyens de mesure du déplacement relatif du poids mobile sont constitués par un repère porté par le poids et par un capteur de déplacement, disposé en regard sur le châssis. De préférence, et dans un mode de réalisation particulier de l'invention, le poids mobile comporte un aimant permanent, se déplaçant avec le poids devant un détecteur magnétique. Avantageusement, le détecteur est réuni à un voyant lumineux, permettant un contrôle visuel, par tout ou rien, de la valeur de la rigidité mesurée par rapport à un seuil prédéterminé.

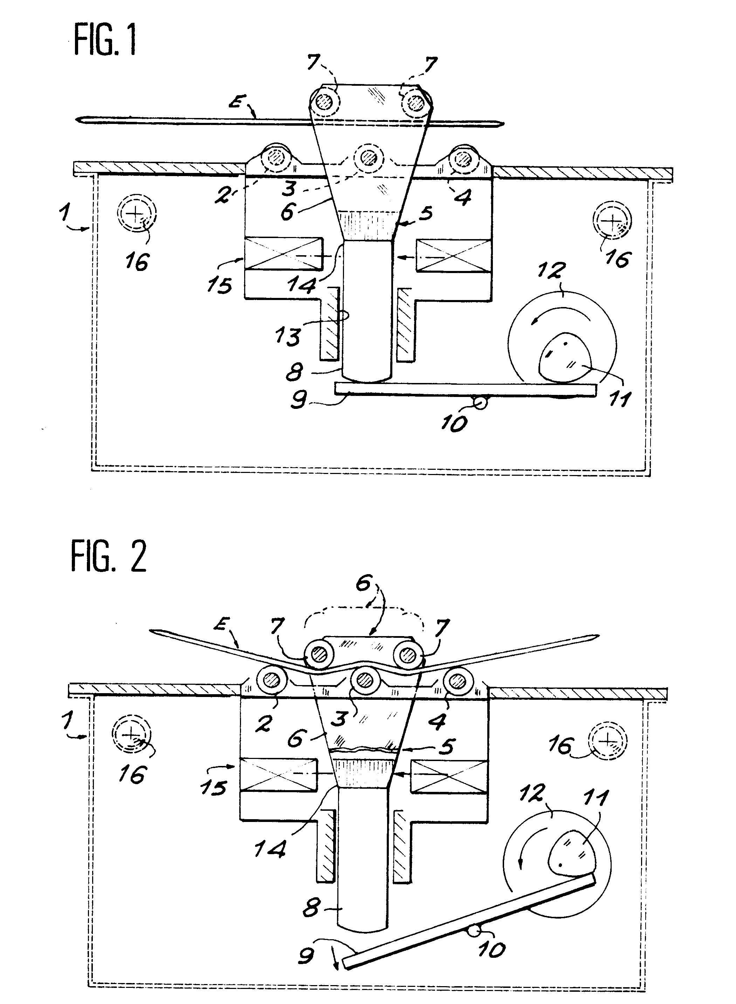

D'autres caractéristiques d'un appareil de contrôle de la rigidité d'un objet plat, notamment d'enveloppes de courrier, apparaîtront encore à travers la description qui suit d'un exemple de réalisation, donné ci-après à titre indicatif et non limitatif, en référence au dessin annexé sur lequel les figures 1 et 2 sont des vues schématiques de l'appareil considéré, dans lesquelles le poids mobile de masse étalonnée est illustré respectivement en position non active où il n'agit pas sur une enveloppe à contrôler puis, après relâchement des moyens d'immobilisation, en position active, où il s'appuie au contraire sur cette enveloppe.

Sur ces figures, la référence 1 désigne un châssis de support de l'appareil schématiquement représenté, comportant une pluralité de points d'appui fixes, équidistants et constitués, dans l'exemple considéré, par trois barres parallèles, respectivement 2, 3 et 4. Un poids mobile de masse étalonnée 5 est disposé au droit de ces barres d'appui fixes et comporte une tête 6, de forme générale triangulaire, partant à son extrémité supérieure deux autres barres 7, parallèles aux barres 2, 3 et 4. Ces barres 7 sont de préférence disposées au milieu des zones délimitées deux à deux par les barres fixes et au-dessus de ces dernières. La tête 6 se prolonge par un corps cylindrique 8, s'étendant vers le bas et en appui, lorsque le poids 5 est en position inactive telle que représentée sur la figure 1, sur l'extrémité d'un levier de blocage 9, le maintenant relevé, notamment avec les barres 7 largement au-dessus des barres fixes 2, 3 et 4.

Le levier de blocage 9 est articulé sur le châssis 1 autour d'un axe 10 et coopère avec un pion en saillie 11, porté par un disque rotatif 12. Les enveloppes dont la rigidité est à contrôler sont placées manuellement. Dans la position illustrée sur la figure 1, où le poids est relevé, le pion 11 est appliqué contre le levier 9 de telle sorte que celui-ci maintienne le poids 5 dans cette position ; en revanche, sur la figure 2, on voit que, suite à la rotation du disque 12, le pion 11 a échappé à l'extrémité du levier 9. Celui-ci peut ainsi pivoter autour de l'axe 10, en libérant le poids 5 qui chute librement vers le bas, en étant avantageusement guidé dans son mouvement par la coopération du corps cylindrique avec un palier 13. Dans ce cas, les barres 7 portées par le poids viennent s'appliquer contre une enveloppe E préalablement introduite entre celles-ci et les barres d'appui fixes 2, 3 et 4, en éprouvant sa rigidité et fournissant une mesure relative de celle-ci. A cet effet, le poids 5 supporte un organe de repérage, ici constitué par un aimant permanent 14, se déplaçant en regard d'un détecteur magnétique 15, qui permet de contrôler la position relative de l'aimant donc du poids mobile 5, par rapport à une référence horizontale en fonction d'un seuil prédéterminé.

On réalise ainsi un appareil de contrôle de la rigidité d'objets plats, notamment d'enveloppes de courrier, de conception très simple et qui permet notamment de désolidariser totalement la commande mécanique de la position du poids mobile de masse étalonnée vis-à-vis des moyens de mesure et d'enregistrement de son déplacement, en supprimant ainsi toute incertitude sur l'interprétation du résultat obtenu. La mesure est du type par tout ou rien et peut être visualisée simplement, par exemple au moyen de voyants lumineux 16, montés sur le châssis 1 et réunis au détecteur 15. L'appareil est d'une particulière fiabilité et n'exige pratiquement aucun entretien.

Bien entendu, il va de soi que l'invention ne se limite pas à l'exemple de réalisation décrit et représenté ci-dessus, elle en embrasse au contraire toutes les variantes. En particulier, on conçoit que ces moyens de mesure du déplacement du poids mobile puissent être différents de ceux envisagés dans cet exemple, notamment électronique, électromagnétique ou autres.

## Revendications

1. Appareil de contrôle de la rigidité d'un objet plat destiné à la correspondance, en particulier du genre enveloppe de courrier ou analogue, comportant un appui fixe pour une enveloppe à contrôler (E), constitué de trois barres (2, 3, 4), équidistantes, parallèles et disposées dans un plan horizontal, ces barres (2, 3, 4) délimitant deux à deux, deux zones voisines de l'enveloppe (E) de même dimension transversales, un poids mobile (5) de masse étalonnée, comprenant deux barres de réaction (7), également parallèles entre elles et aux barres d'appui fixes (2, 3, 4) et disposées au-dessus de l'enveloppe (E), sensiblement au milieu des zones délimitées par ces barres d'appui (2, 3, 4), des moyens (9, 11, 12) pour successivement immobiliser le poids (5) dans une position relevée où ses deux barres (7) ne sont pas en contact avec l'enveloppe (E) alors librement introduites entre les barres respectivement d'appui fixes (2, 3, 4) et de réaction (7) du poids mobile (5), puis pour le libérer de telle sorte qu'il s'appuie sur l'enveloppe (E) par ses deux barres de réaction (7), et enfin pour ramener le poids (5) en position initiale, des moyens (14, 15) pour mesurer le déplacement relatif par rapport à un repère fixe, et des moyens pour faire déplacer l'enveloppe (E) entre les barres d'appui fixes (2, 3, 4) et les barres de réction (7) du poids mobile (5).

2. Appareil de contrôle de la rigidité d'un objet plat selon la revendication 1, caractérisé en ce que les moyens pour immobiliser puis libérer et enfin ramener le poids mobile (5), sont constitués par un levier de blocage (9), sur lequel bute le poids (5) par son extrémité inférieure (8), ce levier (9), articulé sur un axe fixe (10), coopérant avec un pion en saillie (11), entraîné en rotation à vitesse réglable par un disque tournant (12) et immobilisant le levier (9) et le poids (5) pour la position du pion à la verticale de l'axe du disque (12).

3. Appareil de contrôle de la rigidité d'un objet plat selon l'une des revendications 1 ou 2, caractérisé en ce que les moyens (14) de mesure du déplacement relatif du poids mobile (5) sont constitués par un repère porté par ce poids (15) et par un capteur de déplacement, disposé en regard sur le châssis (1).

4. Appareil de contrôle de la rigidité d'un objet plat selon la revendication 3, caractérisé en ce que le poids mobile (5) comporte un aimant permanent (14), se déplaçant avec le poids (5) devant un détecteur magnétique (15).

5. Appareil de contrôle de la rigidité d'un objet plat selon la revendication 4, caractérisé en ce que le détecteur (15) est réuni au moins à un voyant lumineux (4), permettant un contrôle visuel, par tout ou rien, de la valeur de la rigidité mesurée par rapport à un seuil prédéterminé.

## Patentansprüche

1. Vorrichtung zum Messen der Festigkeit eines flachen, für die Korrespondenz bestimmten Gegenstandes, insbesondere Briefumschläge und dergleichen, mit einer festen Auflage für einen zu messenden Umschlag (E), die aus drei äquidistanten, parallelen und in einer horizontalen Ebene angeordneten Stäben (2, 3, 4) besteht, wobei jeweils zwei dieser Stäbe (2, 3, 4) zwei benachbarte Bereiche gleicher transversaler Ausdehnung des Umschlags (E) begrenzen, mit einem beweglichen Gewicht (5) geeichter Masse mit zwei Gegendruckstäben (7), die ebenfalls parallel zueinander und zu den festen Auflagestäben (2, 3, 4) sind und oberhalb des Umschlags (E) im wesentlichen in der Mitte der durch die Auflagestäbe (2, 3, 4) begrenzten Bereiche angeordnet sind, mit Mitteln (9, 11, 12) zum aufeinanderfolgenden Fixieren des Gewichts (5) in einer hochgezogenen Stellung, in der sich die zwei Stäbe (7) nicht in Kontakt mit dem Umschlag (E) befinden, der somit frei zwischen die festen Auflagestäbe (2, 3, 4) und die Gegendruckstäbe (7) des beweglichen Gewichts (5) eingeschoben ist, zum anschließenden Freimachen des Gewichts in der Weise, daß es sich über seine zwei Gegendruckstäbe (7) auf den Umschlag (E) aufstützt, und zum darauffolgenden Zurückführen des Gewichts (5) in seine Ausgangsposition, mit Mitteln (14, 15) zum Messen der relativen Verschiebung bezüglich einer festen Markierung und mit Mitteln, um den Umschlage (E) zwischen den festen Auflagestäben (2, 3, 4) und den Gegendruckstäben (7) des beweglichen Gewichts (5) zu verschieben.

2. Vorrichtung nach Anspruch 1, dadurch **gekennzeichnet,** daß die Mittel zum Fixieren, anschließenden Freimachen und darauffolgenden Zurückführen des beweglichen Gewichts (5) durch einen Blockierhebel (9) gebildet sind, auf den sich das Gewicht (5) durch sein unteres Ende (8) stützt, wobei dieser Hebel (9) an einer festen Achse (10) angelenkt ist und mit einem hervorragenden Metallstück (11) zusammenwirkt, das durch eine Drehscheibe (12) in eine Rotationsbewegung mit regelbarer Geschwindigkeit versetzt wird und den Hebel (9) und das Gewicht (5) mit der Position des hervorragenden Metallstücks senkrecht zur Achse der Drehscheibe (12) festhält.

3. Vorrichtung nach einem der Ansprüche 1 oder 2, dadurch **gekennzeichnet**, daß die Mittel (14) zum Messen der relativen Verschiebung des beweglichen Gewichts (5) durch eine von diesem Gewicht (5) getragene Markierung und durch einen Verschiebungssensor, der gegenüberliegend auf dem Grundrahmen (1) angebracht ist, gebildet sind.

4. Vorrichtung nach Anspruch 3, dadurch **gekennzeichnet**, daß das Bewegliche Gewicht (5) einen Permanentmagneten (14) aufweist, der sich mit dem Gewicht (5) vor einem Magnetfelddetektor (15) verschiebt.

5. Vorrichtung nach Anspruch 4, dadurch **gekennzeichnet**, daß der Detektor (15) mit mindestens einer Leuchtanzeige (16) verbunden ist, die eine visuelle Alles-oder-Nichts-Kontrolle des im Vergleich zu einer vorgegebenen Schwelle gemessenen Festigkeitswerts erlaubt.

## Claims

1. Apparatus for checking the rigidity of a flat object intended for correspondence, in particular in the form of an envelope or the like, comprising a fixed support for an envelope (E) to be checked, constituted by three parallel, equidistant bars (2, 3, 4) arranged in a horizontal plane, said bars (2, 3, 4) defining in pairs two adjacent zones of the envelope (E) having the same transverse dimension, a mobile weight (5) having a calibrated mass and incorporating two reaction bars (7), which are also parallel to one another and to the fixed support bars (2, 3, 4) and positioned above the envelope (E), substantially in the centre of the zones defined by said supports bars (2, 3, 4), means (9, 11, 12) for successively immobilizing the weight (5) in a raised position where its two bars (7) are not in contact with the envelope (E), then freely introduced between the fixed support bars (2, 3, 4) and reaction bars (7) of the mobile weight (5) and then to release it in such a way that it bears on the envelope (E) by its two reaction bars (7), and finally to bring the weight (5) into the initial position, means ( 14, 15 ) for measuring the relative displacement with respect to a fixed reference mark, and means for moving the envelope (E) between the fixed supports bars (2, 3, 4) and the react ion bars (7) of the mobile weight (5).

2. Apparatus for checking the rigidity of a flat object according to claim 1, characterized in that the means for immobilizing, then releasing and finally returning the mobile weight (5) are constituted by a locking lever (9), on which abuts the weight (5) by its lower end (3), said lever (9), which is articulated to a fixed spindle (10), cooperating with a projecting pin (11), which is rotated at a regulatable speed by a rotary disk (12) and immobilizing the lever (9) and the weight (5) for the pin position which is vertical with respect to the axis of the disk (12).

3. Apparatus for checking the rigidity of a flat object according to either of the claims 1 and 2, characterized in that the means (14) for measuring the relative displacement of the mobile weight (5) are constituted by a reference mark carried by the said weight (5) and by a displacement transducer facing the same on the chassis (1).

4. Apparatus for checking the rigidity of a flat object according to claim 3, characterized in that the mobile weight (5) has a permanent magnet (14) moving with the weight (5) in front of a magnetic detector (15).

5. Apparatus for checking the rigidity of a flat object according to claim 4, characterized in that the detector (15) is connected to at least one indicator light (5), permitting a visual check on an all or nothing basis of the value of the rigidity measured with respect to a predetermined threshold.

## FIG. 1

## FIG. 2